# EUROPÄISCHE PATENTSCHRIFT

(11) **EP 2 994 349 B1**
(45) Veröffentlichungstag und Bekanntmachung des Hinweises auf die Patenterteilung: **09.10.2019**
(21) Anmeldenummer: 14722543.7
(22) Anmeldetag: 12.04.2014
(51) Int. Cl.: B60Q 1/04, B60R 19/18

(54) **ABSTÜTZANORDNUNG EINES STOSSFÄNGERS AN EINEM FRONTMODUL EINES KRAFTWAGENS**
SUPPORT STRUCTURE OF A BUMPER ON A FRONT-FACE MODULE OF A MOTOR VEHICLE
STRUCTURE DE SUPPORT DANS UN PARE-CHOC MODULE DE CHÂSSIS AVANT D'AUTOMOBILE

(30) Priorität: 07.05.2013 DE 102013007896
(43) Veröffentlichungstag der Anmeldung: 16.03.2016
(73) Patentinhaber: Daimler AG, 70327 Stuttgart (DE)
(72) Erfinder: KOHLMANN, Uwe, 70794 Filderstadt-Harthausen (DE); NELSON, Anton, 71083 Herrenberg (DE)
(74) Vertreter: JENSEN & SON
(86) Internationale Anmeldenummer: PCT/EP2014/000995
(87) Internationale Veröffentlichungsnummer: WO 2014/180531

(56) Entgegenhaltungen:
- EP-A2- 2 266 865
- DE-A1-102004 012 551
- DE-A1-102006 023 803
- DE-A1-102008 038 842
- DE-B3- 10 237 454
- FR-A1- 2 871 432
- US-A1- 2009 267 364

## Beschreibung

Die Erfindung betrifft eine Abstützanordnung eines Stoßfängers an einem Frontmodul eines Kraftwagens, gemäß Oberbegriff des Anspruchs 1. Des Weiteren betrifft die Erfindung einen Scheinwerfer gemäß Oberbegriff des Anspruchs 7. Schließlich betrifft die Erfindung ein Verfahren zum Herstellen einer solchen Abstützanordnung eines Stoßfängers an einem Frontmodul eines Kraftwagens.

Bei derartigen Abstützanordnungen ist es allgemein wünschenswert, dass eine Stoßfängerverkleidung des Stoßfängers exakt mit an diesen angrenzenden Scheinwerfern am vorderen Ende des Kraftwagens abschließt, und zwar mit relativ geringen Spaltmaßen. Außerdem ist eine hinreichende Abstützung des Stoßfängers bzw. der Stoßfängerverkleidung in Fahrzeughochrichtung wünschenswert, um auch im Dauerbetrieb des Kraftwagens kein Setzen bzw. Absenken der Stoßfängerverkleidung gegenüber dem jeweils zugehörigen Scheinwerfer zu erhalten. Dies würde nämlich das optische Erscheinungsbild der Fahrzeugfront nachteilig beeinflussen und zudem beispielsweise über einen entstehenden Spalt zwischen der Stoßfängerverkleidung und dem jeweiligen Scheinwerfer den Eintritt von Wasser, Schmutz oder dergleichen erlauben. Schließlich ist eine möglichst einfache Montage des Stoßfängers an dem Frontmodul des Kraftwagens wünschenswert, um eine kostengünstige Herstellung zu erreichen.

Aus der DE 10 2005 045 086 A1 geht ein Scheinwerfer mit einem Scheinwerfergehäuse hervor, an dem ein eine Stoßfängerverkleidung haltender Stoßfängerträger, welcher unterhalb des Schweinwerfers angeordnet ist, fest angeschraubt ist. Hierzu weist der Stoßfängerträger Langlöcher auf, in welche die Schrauben der Schraubverbindung eingreifen und auf der anderen Seite in ein in dem Scheinwerfergehäuse vorgesehenes Gewinde einschraubt sind. Die endgültige Lage des Stoßfängerträgers relativ gegenüber dem Scheinwerfer wird also erst dann erreicht, wenn der Stoßfängerträger durch Verschieben entlang der Langlöcher in eine bestimmte Position in Fahrzeuglängs- oder -querrichtung und durch Anziehen der Schrauben dann auch in Fahrzeughochrichtung eingenommen hat. Diese Befestigungsanordnung erfordert in der Montage einer Fahrzeugserienfertigung ein hohes Maß an Präzision und Fingerfertigkeit an den Monteur, der den Stoßfängerträger sowohl ausrichten und gleichzeitig aber auch die Schrauben in die Gewinde einschrauben muss. Dieser Montageaufwand wird bei einer zweiten Ausführungsvariante vermieden, bei der der Stoßfängerträger einstückig am Scheinwerfergehäuse über mehrere Sollbruchstellen angeformt ist. Nachteilig hierbei ist jedoch, dass der Schweinwerfer auch bereits bei einem sogenannten Versicherungs- oder Reparaturcrash, also einem Anprall an ein Hindernis mit nur geringer Geschwindigkeit bereits beschädigt wird und ausgetauscht werden muss, da hier der Stoßfängerträger im Bereich der Sollbruchstellen vom Scheinwerfergehäuse abbricht.

Die DE 10 2006 023 803 A1 offenbart eine kombinierte Scheinwerfer- / Stoßfängerordnung am Frontendbereich oder Frontmodul eines Kraftwagens, bei welcher der Stoßfänger vermittels einer Positioniereinrichtung relativ zum Scheinwerfergehäuse bezüglich der Fahrzeuglängsrichtung ausgerichtet werden kann. Die Positioniereinrichtung umfasst ein Aufnahmemittel, an dem der Stoßfänger angebracht ist, und ein Eingriffsmittel, mit dem der Stoßfänger in eine Führung am Scheinwerfergehäuse in Fahrzeuglängsrichtung eingeschoben werden kann.

Die beschriebene Anordnung ermöglicht lediglich die Ausrichtung von Scheinwerfergehäuse und Stoßfänger bezüglich Fahrzeuglängsrichtung. Die Ausrichtung der beiden Bauteile wird durch eine separate Positioniereinrichtung ermöglicht, die mit der Karosserie verbunden ist, und die den Stoßfänger trägt.

Aufgabe der vorliegenden Erfindung ist es, eine verbesserte Abstützanordnung, einen Scheinwerfer sowie ein Verfahren der eingangs genannten Art zu schaffen, mittels welchem sich eine zuverlässige Ausrichtung des Stoßfängers relativ zu den Scheinwerfern und eine Schonung der Scheinwerfer im Falle eines leichteren Crashs sowie eine einfache Montage des Stoßfängers realisieren lässt.

Diese Aufgabe wird erfindungsgemäß durch eine Abstützanordnung, einen Scheinwerfer sowie ein Verfahren mit den Merkmalen der Ansprüche 1, 7 bzw. 12 gelöst. Vorteilhafte Ausgestaltungen mit zweckmäßigen Weiterbildungen der Erfindung sind in den abhängigen Patentansprüchen angegeben.

Um eine Abstützanordnung der eingangs genannten Art zu schaffen, mittels welcher sich eine besonders zuverlässige Abstützung und eine einfache Montage des Stoßfängers am Frontmodul ergibt, ist es vorgesehen, dass der Stoßfängerträger über wenigstens ein jeweiliges Abstützelement am jeweils zugehörigen Scheinwerfergehäuse abgestützt ist. Mit anderen Worten umfasst der Stoßfängerträger jeweils ein Abstützelement, über welches der Stoßfänger am jeweils zugehörigen Scheinwerfer in Fahrzeughochrichtung (z-Richtung), abgestützt ist. Dazu umfasst das Scheinwerfergehäuse wenigstens eine Aufnahme, an welcher das zugeordnete Abstützelement abstützbar ist. Durch diese Abstützung ist eine direkte und einstellungsfreie Ausrichtung des Stoßfängers beziehungsweise der jeweils fugenrelevanten Bauteile relativ zueinander beziehungsweise zum Frontmodul möglich, und zwar ohne Zusatzteile oder sonstige Betriebsmittel. Zudem ist eine Montage mit geringen Toleranzschwankungen möglich. Auch ist eine Gewichts- und Kostenreduzierung aufgrund des Wegfalls wenigstens eines Zusatzteils oder sonstiger Betriebsmittel möglich. Außerdem wird durch die direkte Abstützung des Stoßfängerträgers an den zugehörigen Scheinwerfergehäusen eine jeweilige Stoßfuge erreicht, welche besonders einheitlich und mit geringem Spaltmaß gestaltet werden kann. Auch im Dauerbetrieb des Kraftwagens über seine Lebenszeit ändert sich diese jeweilige Stoßfuge aufgrund der direkten Abstützung des Stoßfängers am Frontmodul nicht.

Die Abstützung des Stoßfängers am Scheinwerfer mittels der Abstützelemente erfolgt erfindungsgemäß ausschließlich in Fahrzeughochrichtung, also im Fahrzeug eigenen Koordinatensystem in z-Richtung. Mit anderen Worten ist der Stoßfänger in Fahrzeugquerrichtung (y-Richtung) und in Fahrzeuglängsrichtung (x-Richtung) von dem Scheinwerfer entkoppelt, so dass im Crashfall eine Relativbewegung zwischen Stoßfängerträger mit daran angebrachter Stoßfängerverkleidung und Scheinwerfer stattfinden kann, ohne dass es hierzu zu einer Beschädigung des Scheinwerfers, beziehungsweise dessen Gehäuses, kommt. Der Stoßfänger kann sich infolge einer unfallbedingten Kraftbeaufschlagung also gegenüber dem Scheinwerfer entsprechend bewegen, so dass eine Kraftbeaufschlagung des Scheinwerfers, welche diesen beschädigen könnten, vermieden werden kann.

Bei einem besonders vorteilhaften Ausführungsbeispiel der Abstützanordnung liegt das jeweilige Abstützelement an einer am Scheinwerfergehäuse vorgesehenen Anlagekontaktfläche gewichtstragend auf. Durch das einfache Auf- beziehungsweise Absetzen des Stoßfängerträgers auf dem Scheinwerfergehäuse ist die Montage des Stoßfängers besonders einfach. In bevorzugter Ausgestaltung ist die ebene Anlagekontaktfläche bei montiertem Schweinwerfer horizontal ausgerichtet. Aufgrund der neigungsfreien Ausrichtung der Anlagekontaktfläche wird eine selbsttätige Verlagerung des Stoßfängerträgers entlang derselben vermieden.

In weiterer Ausgestaltung der Erfindung hat es sich als vorteilhaft gezeigt, wenn die Abstützelemente am Stoßfängerträger angeordnet und einstückig an diesem angeformt sind. Somit ergibt sich ein fertigungstechnisch besonders einfacher und gleichzeitig am jeweiligen Scheinwerfer abstützbarer Stoßfängerträger.

Schließlich hat es sich als vorteilhaft gezeigt, wenn die Stabilität der jeweiligen Aufnahme eines zugeordneten Scheinwerfergehäuses an die Stabilität des zugeordneten Abstützelements angepasst ist. Eine derartige Anpassung der Stabilität der scheinwerferseitigen Aufnahme an die Stabilität des zugeordneten stoßfängerseitigen Abstützelements kann beispielsweise durch die Wahl geeigneter Werkstoffe und/oder Wandstärken erfolgen. Im Ergebnis kann hierdurch erreicht werden, dass Beschädigungen des Scheinwerfergehäuses bei einer unfallbedingten Kraftbeaufschlagung des Stoßfängers besonders zuverlässig vermieden werden.

Die vorstehend im Zusammenhang mit der Abstützanordnung genannten Vorteile gelten in ebensolcher Weise für den Scheinwerfer gemäß Anspruch 7. Dieser umfasst ein Scheinwerfergehäuse mit wenigstens einer Aufnahme, an welcher ein zugeordnetes Abstützelement eines zur Halterung einer Stoßfängerverkleidung dienender Stoßfängerträger eines Stoßfängers abstützbar ist. Diese Aufnahme am Scheinwerfergehäuse ist so stabil ausgeführt, dass sie den Stoßfänger mit dessen relativ hohen Gewicht trägt. Dies vereinfacht sowohl die Montage des Stoßfängers also auch das Einstellen eines gewünschten Fugenbildes zwischen Stoßfängerverkleidung und Scheinwerfer. Die Aufnahme ist als Schacht ausgebildet, welcher in einer Montageposition das zugeordnete Abstützelement des Stoßfängers umgibt. Durch einen derartigen Schacht ergibt sich eine besonders einfache Montage und Abstützung des korrespondierenden stoßfängerseitigen Abstützelements. Erfindungsgemäß ist vorgesehen, dass die Innenabmessungen des Schachts so an die Außenabmessungen des zugehörigen Abstützelements angepasst sind, dass eine Relativbewegung zwischen Abstützelement und Aufnahme in Fahrzeugquerrichtung (y-Richtung) und/oder Fahrzeuglängsrichtung (x-Richtung) möglich ist. Die Lage des Stoßfängers in z-Richtung/Fahrzeughochrichtung gegenüber dem Scheinwerfergehäuse bleibt so auch bei einer Montage oder Crash bedingten Verlagerung des Stoßfängers gegenüber dem Scheinwerfer gleich, während eine Verschiebung des Stoßfängerträgers in Richtung einer Fahrgastzelle und auch in Fahrzeugquerrichtung in gewissem Maße möglich ist, ohne dass dabei der Scheinwerfer kraftbeaufschlagt wird.

Bei einem besonders vorteilhaften Ausführungsbeispiel der Abstützanordnung, bei dem das jeweilige Abstützelement an einer am Scheinwerfergehäuse vorgesehenen Anlagekontaktfläche gewichtstragend aufliegt, ist die Anlagekontaktfläche zumindest auf einer Seite durch eine in Fahrzeugquerrichtung (x-Richtung) als Anschlag für das Abstützelement dienende Begrenzungswand begrenzt. Dadurch wird verhindert, dass bei einer Querbewegung des Stoßfängerträgers dessen jeweiliges Abstützelement von der Abstützung am Scheinwerfergehäuse herunterrutscht. Des Weiteren wird auch eine gewisse Vorausrichtung bei der Montage erreicht.

Bei einem vorteilhaften Ausführungsbeispiel ist vorgesehen, dass die Anlagekontaktfläche in Fahrzeugquerrichtung auf beiden Seiten von jeweils einer Begrenzungswand begrenzt ist. Damit wird nun auch die Montage-/Einschubrichtung des Abstützelements in die Aufnahme festgelegt, die nun von vorne, das heißt in x-Richtung und/oder von oben her, das heißt in z-Richtung beziehungsweise durch eine diese beiden Richtungen überlagernde Bewegung erfolgt.

Weiterhin vorteilhaft ist es, wenn der Schacht in Einsteckrichtung des zugeordneten Abstützelements konisch oder sich in sonstiger Weise verjüngend ausgebildet ist. Hierdurch ergibt sich eine besonders günstige Montage des Stoßfängers am jeweiligen Scheinwerfergehäuse bzw. Frontmodul.

Die jeweilige Aufnahme des Scheinwerfergehäuses für das zugehörige Abstützelement des Stoßfängers ist vorteilhaft unter Vermittlung eines Zwischenteils mit dem Scheinwerfergehäuse verbunden. Durch dieses Zwischenteil ergibt sich eine besonders günstige Schwingungs- und Geräuschentkopplung.

Bei einem besonders vorteilhaften Ausführungsbeispiel des Scheinwerfers ist die jeweilige Aufnahme über eine biegeelastische Haltelasche am Scheinwerfergehäuse zumindest schwingungsdämpfend angebunden ist. Im und durch den Fahrbetrieb des Fahrzeugs auftretende Schwingungen werden also nicht oder nur in einem unschädlichen Maße vom Stoßfänger beziehungsweise Stoßfängerträger auf den Scheinwerfer, beziehungsweise aufdas Scheinwerfergehäuse, übertragen und ansonsten absorbiert/kompensiert, so dass eine Beschädigung von empfindlichen Teilen des Scheinwerfers, beispielsweise beschichtete Reflektoren und dergleichen vermieden wird.

Die biegeelastische Lasche steht im unbelasteten Zustand des am Fahrzeug montierten Stoßfängers schräg gegenüber einer Wandung des Scheinwerfergehäuses ab, das heißt, zwischen dieser Anbindungslasche und dem Scheinwerfergehäuse besteht ein Freiraum, in welchen die Lasche bei auftretenden Schwingungen ein- und ausschwingen kann, um nicht beziehungsweise nicht übermäßig Schwingungen vom Stoßfänger an das am Frontbereich zumindest mittelbar mit der Karosserie verbundene Scheinwerfergehäuse zu übertragen.

Diese biegeelastische Haltelasche kann an einer Begrenzungswand der das jeweilige Abstützelement aufnehmenden Aufnahme angebracht sein oder aber diese Begrenzungswand der Aufnahme bilden. In bevorzugter Ausführungsform ist die Anbindung der biegeelastischen Lasche am Scheinwerfergehäuse mittels eines Filmscharniers realisiert, das heißt die Lasche ist an das Scheinwerfergehäuse angeformt, wobei die biegeelastischen Anbindung durch entsprechende Wanddicken und Formgebung sowie gegebenenfalls durch entsprechende Materialwahl erreicht wird.

Schließlich hat es sich als vorteilhaft gezeigt, wenn die Aufnahme zwischen jeweiligen Befestigungspunkten des Scheinwerfergehäuses an einem Frontendträger des Frontmoduls des Kraftwagens positioniert ist. Hierdurch ergibt sich eine optimale Abstützung des Stoßfängers in Fahrzeughochrichtung.

Die vorstehend im Zusammenhang mit der erfindungsgemäßen Abstützanordnung und dem erfindungsgemäßen Scheinwerfer genannten Vorteile gelten in ebensolcher Weise für das Verfahren gemäß Patentanspruch 12. Dieses zeichnet sich des Weiteren durch eine besonders einfache und leicht reproduzierbare Vorgehensweise aus.

Weitere Vorteile, Merkmale und Einzelheiten der Erfindung ergeben sich aus der nachfolgenden Beschreibung eines bevorzugten Ausführungsbeispiels sowie anhand der Zeichnung. Dabei zeigen:
- Fig. 1a/1b: eine ausschnittsweise Rückansicht sowie eine ausschnittsweise seitliche Schnittansicht auf einen Stoßfänger für ein Frontmodul eines Personenkraftwagens mit einem ausschnittsweise erkennbaren Stoßfängerträger, welcher außen bzw. vorderseitig durch eine Stoßfängerverkleidung kaschiert ist;
- Fig. 2a/2b: eine ausschnittsweise Perspektivansicht sowie eine ausschnittsweise Draufsicht auf eine Abstützanordnung des Stoßfängers an dem Frontmodul des Personenkraftwagens, bei welcher ein jeweiliger, an einem Frontendträger des Frontmoduls gehaltener Scheinwerfer eine schachtförmige Aufnahme aufweist, an welcher ein zugehöriges Abstützelement des Stoßfängerträgers eingesteckt und hier durch der Stoßfänger in Fahrzeughochrichtung am zugehörigen Scheinwerfer abgestützt ist;
- Fig. 3a/3b: eine ausschnittsweise und perspektivische Schnittansicht sowie eine seitliche Schnittansicht auf die Abstützanordnung gemäß den Figuren 2a und 2b;
- Fig. 4a/4b: jeweils eine ausschnittsweise Schnittansicht entlang einer in Fahrzeughochrichtung bzw. in Fahrzeugquerrichtung verlaufenden Schnittebene durch die Abstützanordnung gemäß den Figuren 2a bis 3b;
- Fig. 5a/5b: eine ausschnittsweise Draufsicht sowie eine ausschnittsweise und perspektivische Schnittansicht entlang einer in Fahrzeuglängsrichtung verlaufenden Schnittebene durch die als Schacht ausgebildete Aufnahme des jeweiligen Scheinwerfergehäuses, in welches das zugehörige Abstützelement des Stoßfängerträgers eingesteckt ist; und in
- Fig. 6a/6b/6c: jeweils eine ausschnittsweise seitliche Schnittansicht durch das entsprechende Scheinwerfergehäuse und den Stoßfänger, wobei die Montage des Stoßfängers an den Scheinwerfern bzw. dem Frontmodul in der Abfolge erläutert ist.

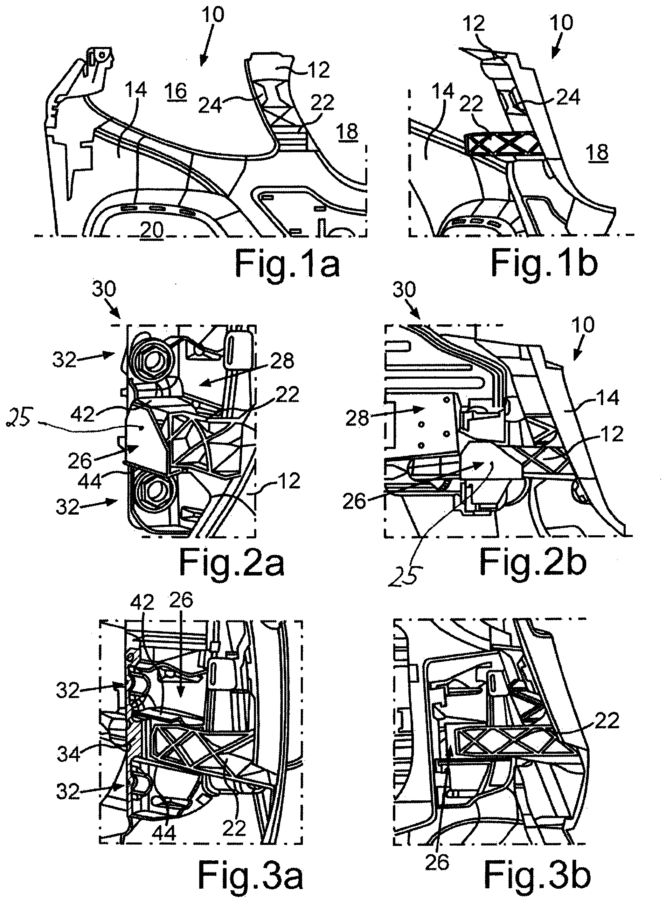

In Figur 1a ist in einer ausschnittsweisen Rückansicht und in Figur 1b in einer ausschnittsweisen geschnittenen Seitenansicht ein Stoßfänger 10 für einen Kraftwagenbug eines Personenkraftwagens dargestellt. Dieser Stoßfänger 10 umfasst einen teilweise erkennbaren Stoßfängerträger 12, welcher außenseitig durch eine Stoßfängerverkleidung 14 kaschiert ist und diese trägt. Die Stoßfängerverkleidung 14 begrenzt unter anderem eine Öffnung 16 für einen im Weiteren noch näher erläuterten linken Scheinwerfer, eine Öffnung 18 für Kühlluft, in welche ein Frontgrill eingesetzt ist, sowie eine Öffnung 20 für eine untere Leuchteinheit, beispielsweise eine Nebelleuchteinheit.

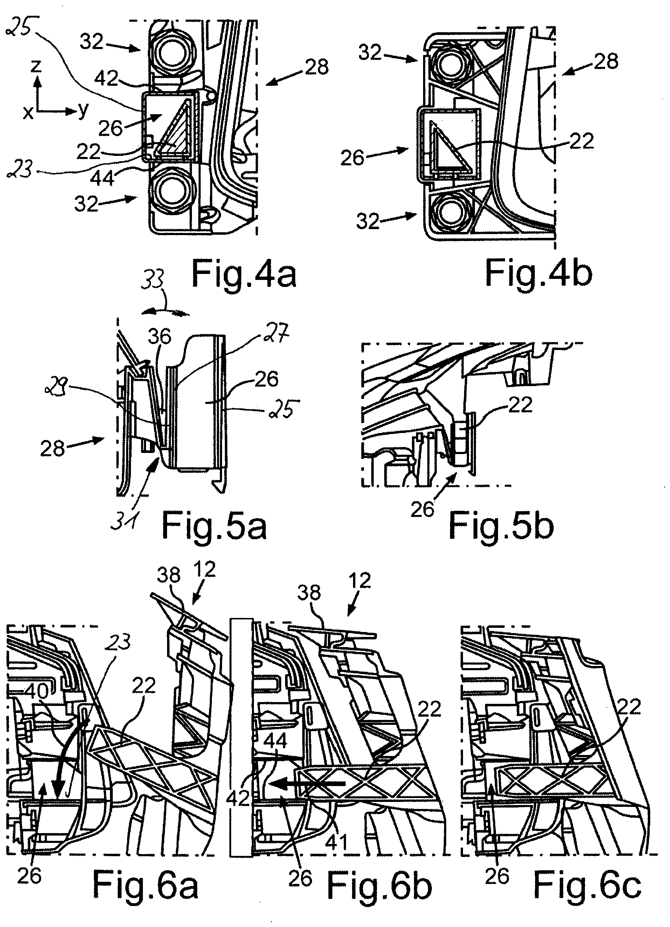

Vom Stoßfängerträger 12 ist eines von bei dem in den Figuren dargestellten Ausführungsbeispiel insgesamt zwei Abstützelementen 22 erkennbar, welches von einem korrespondierenden Teil 24 des insgesamt aus Kunststoff und einstückig gefertigten Stoßfängerträgers 12 in Fahrzeuglängsrichtung, also in x-Richtung des in Figur 4a angedeuteten fahrzeugeigenen Koordinatensystems, und etwa horizontal nach hinten hin absteht. Mit anderen Worten umfasst der Stoßfängerträger 12 auf der anderen, hier rechten Fahrzeugseite ein identisches zweites Abstützelement 22, welches dem rechten Scheinwerfer zugeordnet ist. Dies ist in den Figuren allerdings nicht dargestellt.

Über das jeweilige Abstützelement 22 ist eine Abstützanordnung des Stoßfängers 10 an einem Frontmodul des Personenkraftwagens geschaffen, welche im Weiteren in Zusammenschau der Figuren 2a bis 4b erläutert werden soll.

Wie dabei aus den Figuren 2a bis 3b erkennbar ist, ist das Abstützelement 22 zur Abstützung des Stoßfängerträgers 12 bzw. des Stoßfängers 10 insgesamt in eine zugehörige Aufnahme 26 eingeschoben, welche - wie dies in den Figuren 2a und 2b erkennbar ist - innenseitig von einem jeweiligen Scheinwerfergehäuse 28 eines Scheinwerfers 30 angeordnet ist. Mit Blickrichtung in Vorwärtsfahrtrichtung des Fahrzeugs befindet sich also die am rechten Scheinwerfer vorgesehene Aufnahme 26 im linken Randbereich von dessen Scheinwerfergehäuse und die am linken Scheinwerfer vorgesehene Aufnahme 26 am rechten Randbereich von dessen Scheinwerfergehäuse. Damit sind die beiden Aufnahmen 26 der Scheinwerfer jeweils auf der der Fahrzeuglängsmittelachse und damit auf der einem üblicherweise vorgesehenen Kühlgrill zugewandten Seite des jeweiligen Scheinwerfergehäuses vorgesehen. Das jeweilige Scheinwerfergehäuse 28 ist dabei - wie in den Figuren 2a und 4a erkennbar - mittels einer Mehrzahl von Befestigungselementen an Befestigungspunkten 32 an einem dahinter angeordneten, in den Figuren 3a und 3b erkennbaren Frontendträger 34 des Frontmoduls befestigt. Mithin ist somit die jeweilige Aufnahme 26 des zugehörigen Abstützelements 22 des entsprechenden Scheinwerfergehäuses 28 -in Fahrzeughochrichtung (z-Richtung) betrachtet- zwischen den beiden Befestigungspunkten 32 angeordnet.

Die Aufnahme 26 ist gemäß dem in den Figuren 3a bis 4b dargestellten Ausführungsbeispiel als Schacht ausgebildet, welcher in der hier gezeigten Montageposition das zugeordnete Abstützelement 22 des Stoßfängerträgers 12 außenumfangseitig umgibt.

Wie aus den Figuren 4a und 4b hervorgeht, welche in einer Rückansicht bzw. einer Vorderansicht die Abstützanordnung zeigen, ist das jeweilige, im Querschnitt etwa dreieckförmige Abstützelement 22 innerhalb der rechteckförmigen, schachtartigen Aufnahme 26 aufgenommen, wobei das Abstützelement 22 vorliegend lediglich in Fahrzeughochrichtung (z-Richtung) am Scheinwerfergehäuse 28 abgestützt ist. In Fahrzeugquerrichtung (y-Richtung) und in Fahrzeuglängsrichtung (x-Richtung) hingegen kann sich das armartige Abstützelement 22 relativ zur Aufnahme 26 bewegen. Seitliche Begrenzungswände 25 und 27 des Schachts der Aufnahme 26 begrenzen diese Toleranzbewegung. Der Boden der Aufnahme 26 beziehungsweise des Schachts ist von einer ebenen Fläche gebildet, die im am Fahrzeug montierten Zustand des Scheinwerfers horizontal oder zumindest im Wesentlichen horizontal angeordnet ist, also in einer sich in y- und x-Richtung des Fahrzeugs aufspannenden, gedachten Ebene liegt. Diese Fläche wird im Folgenden als Anlagekontaktfläche 23 bezeichnet, da an dieser Fläche das jeweilige Abstützelement 22 des Stoßfängerträgers 12 und damit der gesamte Stoßfänger 10 gewichtstragend aufliegt.

Wie in Figur 4b ansatzweise angedeutet, liegt das Abstützelement 22 nicht vollflächig auf der Anlagekontaktfläche 23 des Scheinwerfergehäuses 12 auf, sondern weist mehrere leistenähnliche, voneinander beabstandete Abschnitte auf, welche die wirksame Kontaktfläche zwischen Abstützelement 22 und Aufnahme 26 verkleinert, so dass die Haftkräfte entsprechend reduziert und die Montage mit geringerem Kraftaufwand möglich ist.

Festzuhalten bleibt, dass der Stoßfänger 10 somit mittels seines Stoßfängerträgers 12 im vorliegenden Fall mit zwei Abstützelementen 22 an jeweils korrespondierenden Aufnahmen 26 der jeweiligen Scheinwerfergehäuse 28 der entsprechenden Scheinwerfer 30 links und rechts abgestützt ist. Durch diese Abstützung in Fahrzeughochrichtung (z-Richtung) ergibt sich eine optimale Positionierung des Stoßfängers 10 und der Stoßfängerverkleidung 14 relativ zu den Scheinwerfern 30, und zwar zum Scheinwerfergehäuse 28 und einer in die jeweilige Öffnung 16 eingesetzten Scheinwerferabdeckung, welche vorliegend nicht dargestellt ist. Die üblicherweise in Form einer Blende oder Abdeckscheibe ausgebildete Scheinwerferabdeckung weist zumindest einen lichtdurchlässigen Bereich auf, durch den das von einer Lichtquelle ausgestrahlte Licht hindurchscheinen kann. Die Schweinwerferabdeckung kann zusätzlich auch als Streuscheibe ausgebildet sein beziehungsweise als solche fungieren.

Die jeweilige Aufnahme 26 des entsprechenden Scheinwerfergehäuses 28 ist vorliegend durch seine Geometrie und Wandstärkenauslegung sowie seine im Folgenden noch beschriebene Anbindung an das Scheinwerfergehäuse vom eigentlichen Scheinwerfergehäuse 28 abgekoppelt, um hierdurch auch Schäden einer unfallbedingten Kraftbeaufschlagung des Stoßfängers 10 zu vermeiden, vor allem aber um im Fahrbetrieb auftretende Schwingungen nicht oder jedenfalls nur in abgedämpfter Form vom Stoßfängerträger 12 auf den Scheinwerfer 10 zu übertragen, um empfindlichen Komponenten des Scheinwerfers im normalen Fahrzeugbetrieb nicht zu beschädigen. Dabei kann die Stabilität der jeweiligen Aufnahme 26 auch anderweitig gegenüber der Stabilität des zugeordneten stoßfängerseitigen Abstützelements 22 abweichen, beispielsweise durch eine geeignete Materialwahl. Wesentlich ist jedoch auch, dass die Aufnahme 26 und das korrespondierende Abstützelement 22 so aufeinander abgestimmt sind, dass bei einer unfallbedingten Kraftbeaufschlagung und Rückverlagerung des Abstützelements 22 keine Beschädigung des Scheinwerfergehäuses 28 respektive der Aufnahme 26 erfolgt.

Aus den Figuren 5a und 5b ist zudem erkennbar, dass die Aufnahme 26 vorliegend in Einsteckrichtung -also in Fahrzeuglängsrichtung (x-Richtung) von vorne nach hinten- sich verjüngend ausgebildet ist. Hierdurch kann eine besonders günstige und einfache Einführung des korrespondierenden Abstützelements 22 gewährleistet werden. Die im Querschnitt als rechteckförmiger Schacht ausgebildete Aufnahme 26 selbst ist vorliegend unter Vermittlung eines Zwischenteils 36 einstückig mit dem aus Kunststoff gefertigten Scheinwerfergehäuse 28 ausgebildet.

Dieses Zwischenteil 36 ist bei dem in den Figuren darstellten Ausführungsbeispiel von einer Haltelasche 29 gebildet, welche über einen relativ steifen, filmscharnierähnlichen Biegeabschnitt 31 mit dem Grundkörper des Scheinwerfergehäuses 28 einstückig und biegeelastisch verbunden beziehungsweise ausgebildet ist. Gemäß der Darstellung der Figur 5a verläuft die Biege/-Scharnierachse senkrecht zur Bildebene dieser Figur und damit in Fahrzeughochrichtung (z-Richtung) und senkrecht zur Einsteckrichtung des stoßfängerträgerseitigen Abstützelements in die scheinwerferseitige Aufnahme. Diese Anordnung und Ausgestaltung der Anbindung der Aufnahme 26 am Scheinwerfergehäuse 28 weist den Vorteil auf, dass die Aufnahme 26 vom Scheinwerfergehäuse 28 zumindest weitgehend schwingungsentkoppelt ist, das heißt die biegeelastische Haltelasche 29 dämpft zumindest, absorbiert die vom Stoßfänger eingebrachten Schwingungen, damit diese nicht oder nur in einem unschädlichen Maße an das Scheinwerfergehäuse 28 übertragen werden. Dies erfolgt durch eine schwingungsdämpfende Kompensationsbewegung der Aufnahme 26 gegenüber dem Grundkörper des Scheinwerfergehäuses in Richtung eines in Figur 5a darstellten Doppelpfeils 33. Gleichzeitig ist jedoch die Steifigkeit dieser Anbindung in z-Richtung sehr hoch, das heißt die Aufnahme 26 lässt sich in Fahrtrichtung und entgegengesetzter Richtung, also um eine in Fahrzeugquerrichtung verlaufende Achse praktisch nicht verkippen.

Bei einem besonders vorteilhaften Ausführungsbeispiel ist vorgesehen, dass die Haltelasche 29 und die Begrenzungswand 27 der Aufnahme 26 einstückig miteinander ausgebildet sind und somit das Scheinwerfergehäuse, die Lagerung 31 (Biegebereich), die Haltelasche 29 und die Begrenzungswand einteilig ausgestaltet sind.

Anhand der Figuren 6a bis 6c soll nun schließlich eine mögliche Abfolge der Montage des Stoßfängers 10 bzw. zur Herstellung der Abstützanordnung des Stoßfängers 10 am Frontmodul erörtert werden.

Gemäß Fig. 6a wird hierzu zunächst der Stoßfänger 10 vor dem Frontendträger 34 positioniert und zwar so, dass der Stoßfängerträger 12 bzw. der Stoßfänger 10 in einer mit seinem oberen Ende 38 in Fahrzeuglängsrichtung (x-Richtung) nach vorne gekippten Stellung orientiert ist. Aus dieser Stellung wird der Stoßfänger 10 bzw. der Stoßfängerträger 12 derart gemäß dem Pfeil 40 in Blickrichtung entgegen dem Uhrzeigersinn gekippt, dass das obere Ende 38 in Fahrzeuglängsrichtung (x-Richtung) nach hinten, also in Richtung zur Fahrzeugfront hin, bewegt wird. Durch dieses Kippen erfolgt ein Eindrehen der jeweiligen Abstützelemente 22 in die jeweils höheren scheinwerferseitigen Aufnahmen 26. Der jeweilige Schacht der Aufnahme 26 ist dabei - wie dies in Figuren 2a und 2b erkennbar ist- im Bereich einer oberen Wand 42 zurückspringend ausgebildet, so dass das besagte Eindrehen der Abstützelemente 28 in die jeweils zugehörige 26 möglich ist, bis das jeweilige Abstützelement 22 auf eine untere Wand 44 des jeweiligen Schachts der Aufnahme 26 auftrifft.

Gemäß Fig. 6b kann im Anschluss daran - wie durch den Pfeil 41 angedeutet - ein Einschieben des jeweiligen Abstützelements 22 in die zugehörige Aufnahme 26 des Scheinwerfers erfolgen.

Fig. 6c zeigt die Abstützanordnung nach Beendigung des Montagevorgangs, wobei der Stoßfänger 10 unter Vermittlung der jeweiligen Abstützelemente 22 an den zugehörigen Aufnahmen 26 in Fahrzeughochrichtung (z-Richtung) abgestützt ist, wohingegen der Stoßfänger 10 in Fahrzeugquerrichtung (y-Richtung) und in Fahrzeuglängsrichtung (x-Richtung) weiterhin frei beweglich ist, um eine optimale Positionierung des Stoßfängers 10 relativ zu den übrigen Bauteilen des Frontmoduls zu ermöglichen.

Zusammenfassend bleibt festzuhalten, dass mittels der erfindungsgemäßen Abstützanordnung und des erfindungsgemäßen Scheinwerfers eine z-Abstützung des Stoßfängers vorn im Frontmodul, genauer gesagt des Stoßfängerträgers am karosserieseitig befestigten Scheinwerfergehäuse realisierbar ist, bei dem Bewegungsvektoren des Stoßfängers in y-/x-Richtung frei sind. Wie vorstehend anhand eines in den Figuren dargestellten, bevorzugten Ausführungsbeispiels beschrieben, ist eine optimale Schwingung- und auch Geräuschabkopplung im Fahrbetrieb zur Vermeidung von Kräfteeinleitung vom Stoßfänger in das Scheinwerfergehäuse ohne weiteres realisierbar. Besonders vorteilhaft ist weiterhin, dass eine direkte und einstellungsfreie Ausrichtung der fugenrelevanten Bauteile ohne Zusatzteile oder Betriebsmittel, beispielsweise einer Montaglehre, in einfacher Weise dadurch erfolgt, indem der Stoßfängerträger auf dem Scheinwerfergehäuse ab, beziehungsweise aufgesetzt wird.

## Patentansprüche

1. Abstützanordnung eines Stoßfängers (10) an einem Frontendbereich eines Kraftwagens, bei welchem ein Frontendträger (34) mit jeweiligen, daran gehaltenen, jeweils ein Scheinwerfergehäuse (28) aufweisenden Scheinwerfern (30) sowie eine durch mindestens einen Stoßfängerträger (12) gehaltene Stoßfängerverkleidung (14) des Stoßfängers (10) vorgesehen sind,
wobei der Stoßfängerträger (12) über wenigstens ein jeweiliges Abstützelement (22) am Scheinwerfergehäuse (28) des jeweils zugehörigen Scheinwerfers (30) abgestützt ist, und die Abstützung des Abstützelements (22) in einer am Scheinwerfergehäuse (28) vorgesehenen Aufnahme (26) erfolgt, welche - in Fahrzeuglängsrichtung gesehen - oben und/oder vorne zumindest teilweise offen ausgebildet ist,
**dadurch gekennzeichnet, dass**
die jeweilige Aufnahme (26) schachtförmig ausgebildet ist, und dass deren Innenabmessungen so an die Außenabmessungen des darin aufgenommenen Abstützelements (22) angepasst sind, dass eine Relativbewegung zwischen Abstützelement (22) und Aufnahme (26) in Fahrzeugquerrichtung (Y-Richtung) und Fahrzeuglängsrichtung (X-Richtung) auch nach erfolgter Montage möglich ist.

2. Abstützanordnung nach Anspruch 1,
**dadurch gekennzeichnet, dass**
das jeweilige Abstützelement (22) an einer am Scheinwerfergehäuse (28) vorgesehenen Anlagekontaktfläche (23) gewichtstragend aufliegt.

3. Abstützanordnung nach Anspruch 2,
**dadurch gekennzeichnet, dass**
die Anlagekontaktfläche (23) zumindest auf einer Seite durch eine in Fahrzeugquerrichtung (X-Richtung) als Anschlag für das Abstützelement (22) dienende Begrenzungswand (25, 27) begrenzt ist.

4. Abstützanordnung nach einem der vorhergehenden Ansprüche,
**dadurch gekennzeichnet, dass**
die jeweilige Aufnahme (26) über eine biegeelastische Haltelasche (31) am Scheinwerfergehäuse (28) zumindest schwingungsdämpfend angebunden ist.

5. Abstützanordnung nach einem der vorhergehenden Ansprüche,
**dadurch gekennzeichnet, dass**
der Stoßfänger (10) über die Abstützelemente (22) ausschließlich in Fahrzeughochrichtung (Z-Richtung) an den Scheinwerfern (30) abgestützt ist.

6. Abstützanordnung nach einem der vorhergehenden Ansprüche,
**dadurch gekennzeichnet, dass**
die Abstützelemente (22) an dem Stoßfängerträger (12) angeordnet und einstückig angeformt sind.

7. Scheinwerfer (30) für einen Kraftwagen, mit einem Scheinwerfergehäuse (28), wobei das Scheinwerfergehäuse (28) wenigstens eine Aufnahme (26) umfasst, an welcher ein zugeordnetes Abstützelement (22) eines zur Halterung einer Stoßfängerverkleidung (14) vorgesehener Stoßfängerträger (12) eines Stoßfängers (10) abstützbar ist
**dadurch gekennzeichnet, dass**
die Aufnahme (26) als Schacht ausgebildet ist, welcher in einer Montageposition des Scheinwerfers (30) das zugeordnete Abstützelement (22) des Stoßfängers (10) umgibt, wobei die Innenabmessungen des Schachts so an die Außenabmessungen des zugeordneten Abstützelements (22) angepasst sind, dass eine Relativbewegung zwischen Abstützelement und Aufnahme in Fahrzeugquerrichtung (y-Richtung) und Fahrzeuglängsrichtung (x-Richtung) auch nach erfolgter Montage möglich ist.

8. Scheinwerfer nach Anspruch 7 ,
**dadurch gekennzeichnet, dass**
das die Aufnahme (26) eine Anlagekontaktfläche (23) für das Abstützelement (22) des Stoßfängerträgers (12) zur gewichtstragenden Auflage desselben aufweist.

9. Scheinwerfer nach Anspruch 8 oder 9 ,
**dadurch gekennzeichnet, dass**
der Schacht (26) sich in Einsteckrichtung des zugeordneten Abstützelements (22) verjüngt ausgebildet ist.

10. Scheinwerfer nach einem der Ansprüche 7 bis 9,
**dadurch gekennzeichnet, dass**
die Aufnahme (26) unter Vermittlung eines Zwischenteils (36) an dem Scheinwerfergehäuse (28) ausgebildet ist.

11. Scheinwerfer nach einem der Ansprüche 7 bis 10,
**dadurch gekennzeichnet, dass**
die Aufnahme (26) zwischen jeweiligen Befestigungspunkten (32) des Scheinwerfergehäuses (28) an einem Frontendträger (34) eines Frontmoduls des Kraftwagens positioniert ist.

12. Verfahren zur Herstellung einer Abstützanordnung nach einem der Ansprüche 1 bis 6, mit den Schritten:
- Positionieren des Stoßfängers (10) vor dem Frontendträger (34) mit den daran gehaltenen Scheinwerfern (30) in einer mit seinem oberen Ende (38) in Fahrzeuglängsrichtung nach vorne gekippten Stellung;
- Kippen des Stoßfängers (10) mit seinem oberen Ende (38) in Fahrzeuglängsrichtung nach hinten, wobei ein Eindrehen jeweiliger Abstützelemente (22) des Stoßfängers (10) in jeweils zugeordnete Aufnahmen (26) der Scheinwerfer (30) erfolgt; und
- Einschieben der jeweiligen Abstützelemente (22) des Stoßfängers (10) in die jeweils zugeordneten Aufnahmen (26) der Scheinwerfer (30).

## Claims

1. Support structure of a bumper (10) in a front-end region of a motor vehicle, in which are provided a front-end support (34) with respective headlights (30) having a headlight housing (28) each held thereon and a bumper fascia (14) of the bumper (10) held by at least one bumper support (12),
wherein the bumper support (12) is supported on the headlight housing (28) of the respectively associated headlight (30) by way of at least one respective support element (22) and the support element (22) is supported in a receptacle (26) provided at the headlight housing (28), which receptacle (26) - as viewed in the longitudinal direction of the vehicle - is at least partially open at the top and/or the front,
**characterised in that**
the respective receptacle (26) is designed to be shaft-shaped, and **in that** its internal dimensions are matched to the external dimensions of the support element (22) held therein in such a way that a relative movement between the support element (22) and the receptacle (26) in the transverse direction of the vehicle (Y-direction) and the longitudinal direction of the vehicle (X-direction) is possible even after assembly.

2. Support structure according to claim 1,
**characterised in that**
the respective support element (22) lies on a contact surface (23) provided on the headlight housing (28) in a weight-bearing manner.

3. Support structure according to claim 2,
**characterised in that**
the contact surface (23) is bounded on at least one side by a boundary wall (25, 27) serving as a stop for the support element (22) in the transverse direction of the vehicle (X-direction).

4. Support structure according to any of the preceding claims,
**characterised in that**
the respective receptacle (26) is joined in an at least vibration-damping manner to the headlight housing (28) by way of a bending-elastic retaining tab (31).

5. Support structure according to any of the preceding claims,
**characterised in that**
the bumper (10) is exclusively supported on the headlights (30) by way of the support elements (22) in the vertical direction of the vehicle (Z-direction).

6. Support structure according to any of the preceding claims,
**characterised in that**
the support elements (22) are located on the bumper support (12) and integrally formed thereon.

7. Headlight (30) for a motor vehicle with a headlight housing (28),
wherein the headlight housing (28) comprises at least one receptacle (26), on which an associated support element (22) of a bumper support (12) - provided for holding a bumper fascia (14) - of a bumper (10) can be supported,
**characterised in that**
the receptacle (26) is designed as a shaft which surrounds the associated support element (22) of the bumper (10) in an assembled position of the headlight (30), wherein the internal dimensions of the shaft are matched to the external dimensions of the associated support element (22) in such a way that a relative movement between the support element and the receptacle in the transverse direction of the vehicle (Y-direction) and the longitudinal direction of the vehicle (X-direction) is possible even after assembly.

8. Headlight according to claim 7,
**characterised in that**
the receptacle (26) has a contact surface (23) for the support element (22) of the bumper support (12) for the weight-bearing support thereof.

9. Headlight according to claim 7 or 8,
**characterised in that**
the shaft (26) is designed to taper in the insertion direction of the associated support element (22).

10. Headlight according to any of claims 7 to 9,
**characterised in that**
the receptacle (26) is formed at the headlight housing (28) with the interposition of an intermediate part (36).

11. Headlight according to any of claims 7 to 10,
**characterised in that**
the receptacle (26) is positioned at a front-end support (34) of a front-end module of the motor vehicle between respective fastening points (32) of the headlight housing (28).

12. Method for producing a support structure according to any of claims 1 to 6, comprising the steps of:
- positioning the bumper (10) in front of the front-end support (34) with the headlights (30) held thereon with its upper end (38) tilted towards the front in the longitudinal direction of the vehicle;
- tilting the bumper (10) towards the rear with its upper end (38) in the longitudinal direction of the vehicle, wherein respective support elements (22) of the bumper (10) are driven into associated receptacles (26) of the headlights (30); and
- insertion of the respective support elements (22) of the bumper (10) into the respectively associated receptacles (26) of the headlights (30).

## Revendications

1. Agencement d'appui d'un pare-chocs (10) sur une région frontale d'un véhicule automobile, dans lequel un support frontal (34) avec des phares respectifs (30) maintenus à celui-ci, présentant chacun un logement de phare (28) ainsi qu'un habillage de pare-chocs (14) du pare-chocs (10) maintenu par au moins un support de pare-chocs (12) sont prévus,
dans lequel le support de pare-chocs (12) est appuyé par le biais d'au moins un élément d'appui respectif (22) sur le logement de phare (28) du phare associé respectivement (30), et l'appui de l'élément d'appui (22) s'effectue dans un hébergement (26) prévu sur le logement de phare (28), lequel est réalisé de manière au moins partiellement ouverte en haut et/ou à l'avant, vu dans la direction longitudinale de véhicule,
**caractérisé en ce que**
l'hébergement respectif (26) est réalisé en forme de gaine, et que ses dimensions internes sont adaptées aux dimensions externes de l'élément d'appui (22) hébergé en son sein de sorte qu'un mouvement relatif entre élément d'appui (22) et hébergement (26) dans la direction transversale de véhicule (direction Y) et la direction longitudinale de véhicule (direction X) est également possible après un montage réussi.

2. Agencement d'appui selon la revendication 1,
**caractérisé en ce que**
l'élément d'appui respectif (22) repose de manière portante sur une face de contact (23) prévue sur le logement de phare (28).

3. Agencement d'appui selon la revendication 2,
**caractérisé en ce que**
la face de contact (23) est limitée sur un côté par une paroi de limitation (25, 27) servant de butée pour l'élément d'appui (22) dans la direction transversale de véhicule (direction X).

4. Agencement d'appui selon une des revendications précédentes,
**caractérisé en ce que**
l'hébergement respectif (26) est attaché au logement de phare (28) de manière à au moins amortir les vibrations par le biais d'une attache de maintien élastique en flexion (31).

5. Agencement d'appui selon une des revendications précédentes,
**caractérisé en ce que**
le pare-chocs (10) est appuyé sur les phares (30) par le biais des éléments d'appui (22) exclusivement dans la direction de hauteur de véhicule (direction Z).

6. Agencement d'appui selon une des revendications précédentes,
**caractérisé en ce que**
les éléments d'appui (22) sont disposés et moulés d'une pièce sur le support de pare-chocs (12).

7. Phare (30) pour un véhicule automobile, avec un logement de phare (28), dans lequel le logement de phare (28) comprend au moins un hébergement (26) sur lequel un élément d'appui associé (22) d'un support de pare-chocs (12) d'un pare-chocs (10) prévu pour la fixation d'un habillage de pare-chocs (14) peut être appuyé,
**caractérisé en ce que**
l'hébergement (26) est réalisé en tant que gaine qui entoure l'élément d'appui associé (22) du pare-chocs (10) dans une position de montage du phare (30), dans lequel les dimensions internes de la gaine sont adaptées aux dimensions externes de l'élément d'appui associé (22) de sorte qu'un mouvement relatif entre élément d'appui et hébergement dans la direction transversale de véhicule (direction y) et la direction longitudinale de véhicule (direction x) est également possible après un montage réussi.

8. Phare selon la revendication 7,
**caractérisé en ce que**
l'hébergement (26) présente une face de contact (23) pour l'élément d'appui (22) du support de pare-chocs (12) pour le support portant de celui-ci.

9. Phare selon la revendication 8 ou 9,
**caractérisé en ce que**
la gaine (26) est réalisée de manière à rétrécir dans la direction d'emboîtement de l'élément d'appui associé (22).

10. Phare selon une des revendications 7 à 9,
**caractérisé en ce que**
l'hébergement (26) est réalisé en interposant une pièce intermédiaire (36) sur le logement de phare (28).

11. Phare selon une des revendications 7 à 10,
**caractérisé en ce que**
l'hébergement (26) est positionné entre des points de fixation respectifs (32) du logement de phare (28) sur un support frontal (34) d'un module avant du véhicule automobile.

12. Procédé de fabrication d'un agencement d'appui selon une des revendications 1 à 6, avec les étapes de :
- positionnement du pare-chocs (10) devant le support frontal (34) avec les phares (30) maintenus sur lui dans une position basculée vers l'avant avec son extrémité supérieure (38) dans la direction longitudinale de véhicule ;
- basculement du pare-chocs (10) avec son extrémité supérieure (38) dans la direction longitudinale de véhicule vers l'arrière, dans lequel un vissage d'éléments d'appui respectifs (22) du pare-chocs (10) s'effectue dans des hébergements associés respectivement (26) des phares (30) ; et
- insertion des éléments d'appui respectifs (22) du pare-chocs (10) dans les hébergements associés respectivement (26) des phares (30).
